# EUROPÄISCHE PATENTANMELDUNG

(11) **EP 2 239 550 A2**
(43) Veröffentlichungstag der Anmeldung: **13.10.2010**
(21) Anmeldenummer: 10003844.7
(22) Anmeldetag: 10.04.2010
(51) Int. Cl.: G01M 1/36

(54) **Auswuchtvorrichtung für eine Welle, Handwerkzeugmaschine mit der Auswuchtvorrichtung sowie Verfahren zur Fertigung der Auswuchtvorrichtung**

(30) Priorität: 11.04.2009 DE 102009017269
(71) Anmelder: Schaeffler Technologies GmbH & Co. KG, 91074 Herzogenaurach (DE)
(72) Erfinder: Hehn, Werner, 91056 Erlangen (DE); Bauer, Jörg, 91056 Erlangen (DE); Nuißl, Christian, 90763 Fürth (DE)

(57) **Zusammenfassung**

Der Erfindung liegt die Aufgabe zugrunde, eine Auswuchtvorrichtung vorzuschlagen, welche eine gute Funktionseigenschaft aufweist.

Hierzu wird eine Auswuchtvorrichtung 1 zur drehfesten Anordnung auf einer Welle 13, wobei die Welle 13 um eine Drehachse 2 rotierbar ist, vorgeschlagen, mit einem Ringkanal 3, welcher konzentrisch und/oder koaxial zu der Drehachse 2 angeordnet ist, mit einer Auswuchtmasse 4, welche in dem Ringkanal 3 frei bewegbar angeordnet ist, und mit einem Metallgrundkörper 5, der den Ringkanal 3 trägt und der einen Aufnahmeabschnitt 6 aufweist, welcher zur Aufnahme der Welle 13 ausgebildet ist, und mit einer Zwischenlage 10 aus Kunststoff, welche an dem Aufnahmeabschnitt 6 angeordnet und/oder befestigt ist und zur Anlage an der Welle 13 ausgebildet ist.

## Beschreibung

### Bezeichnung der Erfindung

Auswuchtvorrichtung für eine Welle, Handwerkzeugmaschine mit der Auswuchtvorrichtung sowie Verfahren zur Fertigung der Auswuchtvorrichtung

### Beschreibung

### Gebiet der Erfindung

Die Erfindung betrifft eine Auswuchtvorrichtung zur drehfesten Anordnung auf einer Welle, wobei die Welle um eine Drehachse rotierbar ist, mit einem Ringkanal, welcher konzentrisch und/oder koaxial zu der Drehachse angeordnet ist, mit einer Auswuchtmasse, welche in dem Ringkanal frei bewegbar angeordnet ist und mit einem Metallgrundkörper, der den Ringkanal trägt und der einen Aufnahmeabschnitt aufweist, welcher zur Aufnahme der Welle ausgebildet ist. Die Erfindung betrifft auch eine Handwerkzeugmaschine mit und ein Verfahren zur Fertigung der Auswuchtvorrichtung.

Bei rotierenden Teilen führen Unwuchten von mit den rotierenden Teilen gekoppelten Massen zu Vibrationen, welche in Abhängigkeit der Stärke der Vibrationen als unangenehme Begleiterscheinungen auftreten oder sogar eine das drehende Teil tragende Vorrichtung beschädigen können. Bei Maschinen, die im Betrieb von der Hand aufgenommen werden, ist es sogar nicht restlos auszuschließen, dass derartige Vibrationen bei Dauerbelastung zu körperlichen Schäden des Benutzers führen können. Um derartige Vibrationen zu verringern oder zu kompensieren, ist es üblich, Unwuchtausgleichselemente, einzusetzen. Derartige Unwuchtausgleichselemente sind Vorrichtungen, welche mit dem rotierenden Teil drehfest gekoppelt sind und Auswuchtmassen aufweisen, die sich auf einer Kreisbahn um die Drehachse des rotierenden Teils frei bewegen können. Diese Auswuchtmassen verlagern sich bei einer auftretenden Unwucht bei dem rotierenden Teil automatisch an Positionen, die sich gegenüber der Unwucht befinden. Dadurch wird ein Gegengewicht gebildet, welches die Unwucht zumindest ansatzweise ausgleicht oder minimiert.

Derartige Autobalancer sind beispielsweise aus der Druckschrift DE 10 2006 030 163 A1 der Anmelderin bekannt, die wohl den nächst kommenden Stand der Technik bildet. In dieser Druckschrift wird eine Einrichtung zum selbsttätigen Auswuchten eines sich drehenden Maschinenteils offenbart, wobei innerhalb einer die Rotationsachse des Maschinenteils umgebenden Unwuchtausgleichsscheibe in einem ringförmigen Hohlraum frei bewegliche Auswuchtmassen angeordnet sind, die die vorhandene Unwucht durch Einnahme einer Gegenlage ausgleichen. Die Unwuchtausgleichsscheibe ist aus zwei Halbscheiben aufgebaut, welche mindestens eine in axialer Richtung verlaufende Trennebene aufweisen. Eine ähnliche Einrichtung ist auch aus der Druckschrift EP 1 174 537 B1, ebenfalls von der Anmelderin, bekannt.

Der Erfindung liegt die Aufgabe zugrunde, eine Auswuchtvorrichtung vorzuschlagen, welche eine gute Funktionseigenschaft aufweist.

Diese Aufgabe wird durch eine Auswuchtvorrichtung mit den Merkmalen des Anspruches 1, durch eine Handwerkzeugmaschine mit den Merkmalen des Anspruchs 14 und durch ein Verfahren zur Fertigung der Auswuchtvorrichtung mit den Merkmalen des Anspruches 15 gelöst. Bevorzugte oder vorteilhafte Ausführungsformen der Erfindung ergeben sich aus den Unteransprüchen, der nachfolgenden Beschreibung sowie den beigefügten Figuren.

Die erfindungsgemäße Auswuchtvorrichtung ist zur drehfesten Anordnung auf einer Welle geeignet und/oder ausgebildet, so dass sie im Betrieb gemeinsam mit der Welle um eine Drehachse der Welle rotiert. Optional kann die Auswuchtvorrichtung zum dauerhaften Aufsetzen auf der Welle ausgebildet sein, so dass diese nur zerstörend demontiert werden kann, oder die Auswuchtvorrichtung ist zur mehrmaligen Montage- und Demontage auf der Welle ausgebildet. Sie weist einen die Welle umlaufenden Ringkanal auf, welcher konzentrisch und/oder koaxial zu der Drehachse angeordnet ist. Der Ringkanal kann im Querschnitt senkrecht zu seiner Umlaufrichtung rechteckig, rund, oval, bei abgewandelten Ausführungsformen beispielsweise auch schlüssellochähnlich, wie die Außenform einer Acht ausgebildet sein. Es ist auch möglich, dass die Auswuchtvorrichtung mehrere konzentrischer Ringkanäle aufweist, welche in axialer Richtung oder in radialer Richtung in Bezug auf die Drehachse benachbart angeordnet sind.

Die Welle bezeichnet in der allgemeinsten Ausführungsform einen Bereich des Maschinenbauteils, welches im Betrieb um eine eigene Drehachse rotiert. Die Welle kann insbesondere auch als ein Teil, insbesondere ein Endabschnitt oder Zwischenabschnitt eines größeren rotierenden Körpers oder des Maschinenbauteils ausgebildet sein. Bevorzugt ist die Welle aber als ein stabförmiges, optional abgestuftes und/oder abgeschrägtes, und/oder rotationssymmetrisches Bauteil ausgebildet.

In dem Ringkanal ist eine Auswuchtmasse angeordnet, welche sich entlang des Ringkanals auf einer Kreisbahn um die Drehachse frei bewegen kann. Bevorzugt ist die Auswuchtmasse als eine Mehrzahl von Auswuchtkörpern ausgebildet, welche zum Beispiel als Kugeln verkörpert sind, die verklemmungsfrei in dem Ringkanal abrollen können.

Es ist besonders bevorzugt, wenn der Füllgrad des Ringkanals mit der Auswuchtmasse weniger als die Hälfte des Umfanges des Ringkanals gefüllt ist. Optional kann in dem Ringkanal eine dämpfende und/oder mittelviskose oder sogar hochviskose Flüssigkeit, wie zum Beispiel ein Öl, eingebracht sein. Bei einer Rotation der Welle bewegt sich die Auswuchtmasse selbsttätig in einer Position gegenüberliegend zu einer Unwucht der Welle und/oder von der Welle gekoppelten Massen, so dass die Unwucht durch die Auswuchtmasse kompensiert oder zumindest verringert wird.

Die Auswuchtvorrichtung umfasst einen Metallgrundkörper, der den Ringkanal trägt und der einen Aufnahmeabschnitt aufweist, welcher zur Aufnahme der Welle ausgebildet ist. Der Metallgrundkörper kann nach einem beliebigen Verfahren, zum Beispiel durch ein Sinterverfahren, ein spanabhebendes Verfahren, oder auch durch ein MIM-Verfahren (metal injection molding) gefertigt werden. Der Metallgrundkörper trägt den Ringkanal, wobei dieser bei manchen Ausführungsformen einstückig in den Metallgrundkörper eingebracht sein kann, bei anderen Ausführungsformen auf dem Metallgrundkörper aufgesetzt oder angeordnet ist. Ferner umfasst der Metallgrundkörper einen Aufnahmeabschnitt, welcher zur Aufnahme der Welle ausgebildet ist. Besonders bevorzugt ist der Aufnahmeabschnitt als eine Durchgangsöffnung ausgebildet, durch die die Welle durchgesteckt werden kann. Insbesondere ist der Metallgrundkörper als ein Adapterabschnitt ausgebildet, der auf die Welle aufgesteckt oder aufgepresst werden kann.

Der Erfindung folgend wird vorgeschlagen, dass eine Zwischenlage aus Kunststoff an, insbesondere in, dem Aufnahmeabschnitt angeordnet und/oder befestigt ist, welche zur Anlage an der Welle ausgebildet ist. Die Zwischenlage ist insbesondere derart positioniert, dass diese bei montierter Auswuchtvorrichtung zwischen der Welle und dem Adapterabschnitt bzw. der Auswuchtvorrichtung positioniert ist. Beispielsweise kann die Zwischenlage als eine Hülse oder ein Hülsenabschnitt ausgebildet sein, welche in den Aufnahmeabschnitt eingeführt ist und die Welle in radialer Richtung von dem Aufnahmeabschnitt zumindest abschnittsweise trennt.

Die Zwischenlage kann ausgebildet sein, dass sich diese vollflächig, aber auch nur teilflächig, zwischen der Welle und dem Aufnahmeabschnitt erstreckt. Bei einer teilflächigen Ausbildung erstreckt sich die Zwischenlage beispielsweise nicht über die gesamte axiale Länge des Aufnahmeabschnitts. Alternativ oder ergänzend ist es auch denkbar, dass die Zwischenlage in Umlaufrichtung um die Welle nur teilflächig realisiert ist.

Ein Gedanke der Erfindung ist es, dass der Relativpositionierung zwischen Welle und Auswuchtvorrichtung für die Funktion der Auswuchtvorrichtung eine tragende Rolle zukommt. Für den Fall, dass die Auswuchtvorrichtung und die Welle zueinander fehlpositioniert sind, kann die Auswuchtvorrichtung in kontraproduktiver Weise sogar zur Unwucht beitragen. Durch den Einsatz einer Zwischenlage aus Kunststoff zwischen Adapterabschnitt und Welle wird ein Koppelelement aus Kunststoff geschaffen, welches kostengünstig in hoher Qualität zu fertigen ist und auf diese Weise die Genauigkeit der Relativpositionierung erhöhen kann. Ein weiterer Vorteil der Erfindung kann auch die Erhöhung des Wirkungsgrads der Gesamtvorrichtung sein.

Bei einer bevorzugten konstruktiven Realisierung ist die Zwischenschicht so geformt, dass diese einen Wellensitz für die Welle bildet. Hierbei ist es z.B. möglich, dass der Wellensitz eine zylindrische, eine keglige oder eine konische Aufnahmestruktur für die Welle bereitstellt. Durch diese und weitere konstruktive Varianten der Zwischenlage ist es möglich eine nahezu exakte Positionierung des Metallgrundkörper zu erreichen.

Bei einer möglichen Weiterbildung der Erfindung umfasst die Zwischenlage mehrere zu der Drehachse der Welle gleichgerichtete Längsrippen aus Kunststoff. Durch diese konstruktive Ausgestaltung ist es möglich, dass eine Welle mit einem dazu komplementär ausgebildeten umlaufenden Profil sehr genau in den Aufnahmeabschnitt eingeschoben werden kann.

Bei einer möglichen Weiterbildung der Erfindung sind die Längsrippen an die Welle derart angepasst, so dass sich bei der Montage eine Überdeckung ergibt. Eine Überdeckung wird dadurch erreicht, dass die Längsrippen so dimensioniert sind, dass diese in der Endposition in die Oberfläche der Welle hineinragen würden. Nachdem dies physikalisch nicht möglich ist, wird der überdeckende Teil der Längsrippen bei einer pressenden Montage der Auswuchtvorrichtung auf die Welle verdrängt und bildet ein Ausgleichsvolumen, so dass ein Spiel zwischen Auswuchtvorrichtung und Welle ausgeschlossen ist. Ferner erhöht das verdrängte Volumen die Festigkeit der kraft- und/oder reibschlüssigen Verbindung zwischen Auswuchtvorrichtung und Welle.

Bei einer besonders bevorzugten Realisierung der Erfindung ist die Zwischenlage an dem Metallgrundkörper stoffschlüssig, zum Beispiel durch Kleben oder Anformen, befestigt. Durch diese Modifikation ist die Zwischenlage verlier- und vertauschsicher positioniert.

Bei einer Weiterbildung der Erfindung ist die Zwischenlage im Kunststoffspritzgussverfahren unmittelbar an den Metallgrundkörper angespritzt. Diese Ausführungsform hat den Vorteil, dass die Positionierung der Zwischenlage in dem Metallgrundkörper sehr genau erfolgen kann, indem zunächst der Metallgrundkörper sehr genau in einem Werkzeug, insbesondere Spritzwerkzeug, positioniert wird und die Zwischenlage in dem Werkzeug an den Metallgrundkörper angespritzt wird.

Bei einer Weiterentwicklung der Erfindung weist der Metallgrundkörper Positionierungshilfen zur Positionierung in dem Werkzeug auf. Durch diese Positionierungshilfen kann der Metallgrundkörper reproduzierbar und hochgenau in das Spritzwerkzeug eingelegt werden. Folglich ist auch die Zwischenlage in sehr hoher Genauigkeit zu fertigen. Als Resultat erhält man eine Baueinheit, umfassend den Metallgrundkörper und die Zwischenlage, welche - insbesondere in Bezug auf den Innendurchmesser der Baueinheit zur Aufnahme der Welle - hochgenau gefertigt ist.

Bei einer möglichen konstruktiven Realisierung sind die Positionierhilfen als Schwalbenschwanzführungen ausgebildet, welche bei einer denkbaren Ausführungsform auf einer Stirnseite des Metallgrundkörpers eingeformt sind und sich in radialer Richtung zu der Drehachse erstrecken. Es ist möglich, dass diese Schwalbenschwanzführungen teilweise mit eingespritzt werden und damit einen Kanal zum Transport des flüssigen Kunststoffs bilden.

Bei einer möglichen Weiterbildung der Erfindung wird der Ringkanal durch einen ein- oder mehrteiligen Kunststoffträger gebildet, der an dem Metallgrundkörper stoffschlüssig befestigt ist. Durch die Verwendung eines Kunststoffträgers wird eine kostengünstig zu fertigende und leichte Baueinheit realisiert.

Besonders bevorzugt ist es, wenn der Kunststoffträger analog zu der Zwischenlage im Kunststoffspritzguss an den Metallgrundkörper angespritzt ist. Hier ergeben sich die Vorteile der Zwischenlage in analoger Weise für den Kunststoffträger.

Besonders vorteilhaft ist es, wenn die Zwischenlage und der Kunststoffträger in dem gleichen Werkzeug in Kunststoffspritzguss an den Metallgrundkörper angespritzt sind. In diesem Fall kann der Metallgrundkörper in dem gemeinsamen Spritzwerkzeug optional über die Positionierhilfen hochgenau eingelegt werden und dann zeitgleich, vorzugsweise ohne Bewegung des Metallgrundkörpers, insbesondere in gleicher Lage des Metallgrundkörpers die Zwischenlage und der Trägerkörper angespritzt werden. Dadurch, dass Zwischenlage und Trägerkörper in einem gemeinsamen Werkzeug angespritzt sind, sind diese als Funktionskomponenten hochgenau zueinander positioniert, so dass der Ringkanal mit hoher Genauigkeit relativ zu der Welle ausgerichtet ist.

Bei vorteilhaften Weiterbildungen weist der Metallgrundkörper eine, einige oder alle der nachfolgenden funktionsbegründenden Merkmale auf:
- Der Metallgrundkörper kann eine Aufnahmegeometrie aufweisen, in die die Welle formschlüssig eingreift, wobei sich der Formschluss in Umlaufrichtung ergibt. Beispielsweise kann die Aufnahmegeometrie als ein Zwei-flach ausgebildet sein.
- Ferner kann der Metallgrundkörper eine Zentrierschulter aufweisen, welche als Stutzen auskragend an den Metallgrundkörper angeformt ist und welche eine aufgesetzte Schleifscheibe zentrierend aufnimmt.
- Als weiteres mögliches Merkmal zeigt der Metallgrundkörper an einer Stirnseite einen umlaufenden Anlagebereich z.B. in Form eines Kreisrings, an den sich die Schleifscheibe im Betrieb anlegen kann.

Bei einer möglichen Weiterbildung der Erfindung sind weitere Bereiche des Metallgrundkörpers mit Kunststoff um- und/oder überspritzt. Besonders bevorzugt ist es, wenn der Bereich der Zwischenlage mit dem Bereich des Tragkörpers über den gespritzten Kunststoff einstückig oder einmaterialig verbunden ist.

Ein weiterer Gegenstand der Erfindung betrifft eine Handwerkzeugmaschine, insbesondere eine Schleifmaschine oder einen Winkelschleifer, der eine Auswuchtvorrichtung nach einem der vorhergehenden Ansprüche bzw. wie sie soeben beschrieben wurde aufweist.

Ein letzter Gegenstand der Erfindung betrifft ein Verfahren zur Fertigung der Auswuchtvorrichtung, wie sie zuvor beschrieben wurde bzw. nach einem der vorhergehenden Ansprüche 6 bis 13, wobei die Zwischenlage in einem Werkzeug mittels Kunststoffspritzguss angespritzt wird und wobei optional der Kunststoffträger in dem gleichen Werkzeug und/oder gleichzeitig angespritzt wird. Insbesondere werden die Zwischenlage und der Kunststoffträger ohne Änderung der Lage des Metallgrundkörpers angespritzt.

Weitere Merkmale, Vorteile und Wirkungen der Erfindung ergeben sich aus der nachfolgenden Beschreibung bevorzugter Ausführungsbeispiele der Erfindung sowie den beigefügten Figuren. Dabei zeigen:
- Figur 1: eine schematische Längsschnitt-Darstellung einer Auswuchtvor- richtung als ein erstes Ausführungsbeispiel der Erfindung;
- Figur 2: in gleicher Darstellung wie die Figur 1 ein zweites Ausführungs- beispiel der Erfindung;
- Figur 3: in gleicher Darstellung wie die vorhergehenden Figuren ein drittes Ausführungsbeispiel der Erfindung;
- Figur 4: die Vorrichtung der Figur 1 in gleicher Darstellung mit einge- setzter Welle;
- Figur 5: die Vorrichtung in Figur 3 ebenfalls mit eingesetzter Welle;
- Figur 6: eine Draufsicht auf die Vorrichtung gemäß der Figur 1;

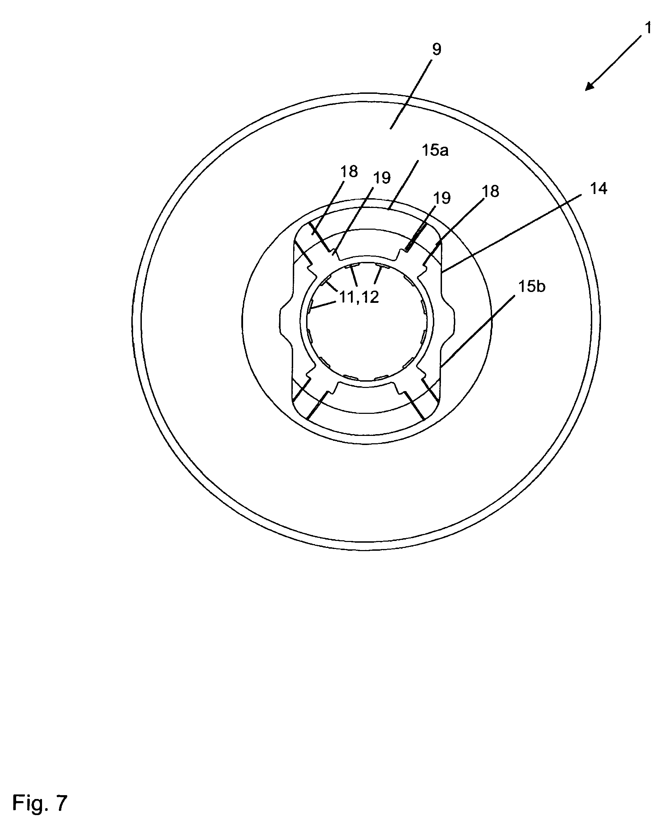

- Figur 7: eine Draufsicht auf die Ausführung gemäß der Figur 2;
- Figur 8: eine schematische dreidimensionale Darstellung der Auswucht- vorrichtung in den Figuren 2 und 7.

Einander entsprechende oder gleiche Teile sind jeweils mit einander entsprechenden oder gleichen Bezugsziffern versehen.

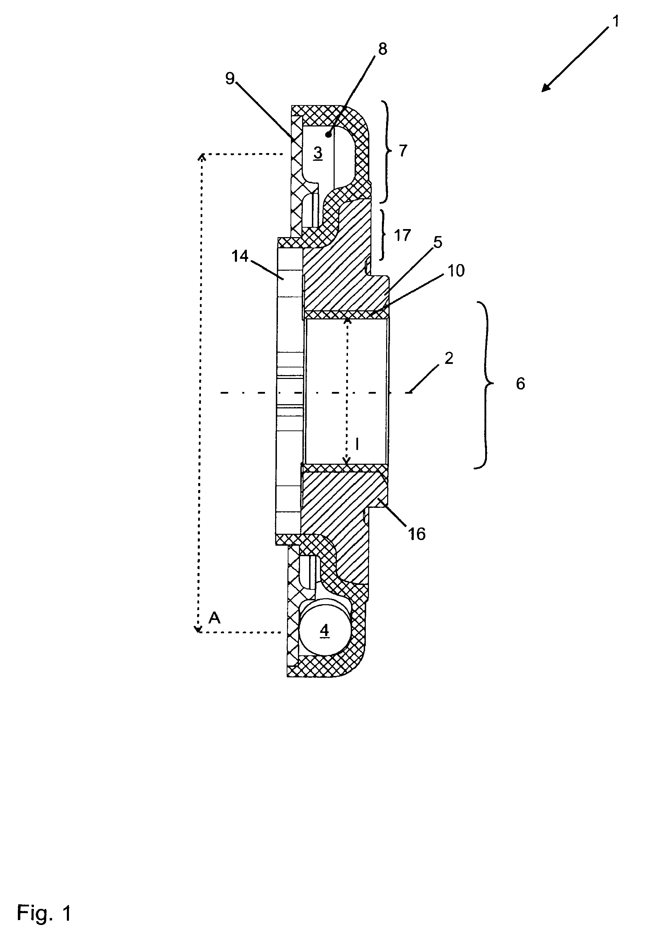

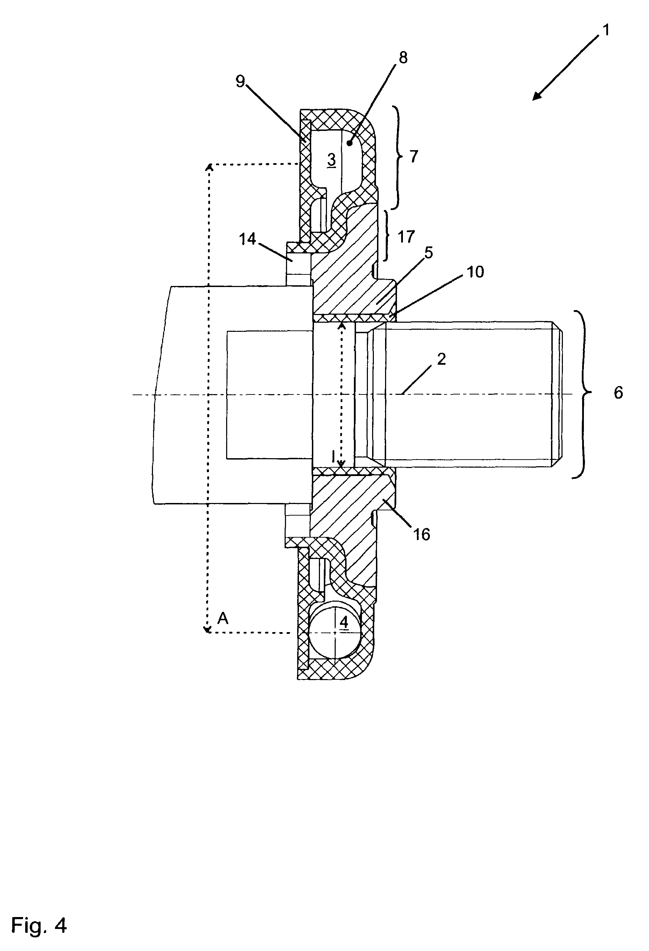

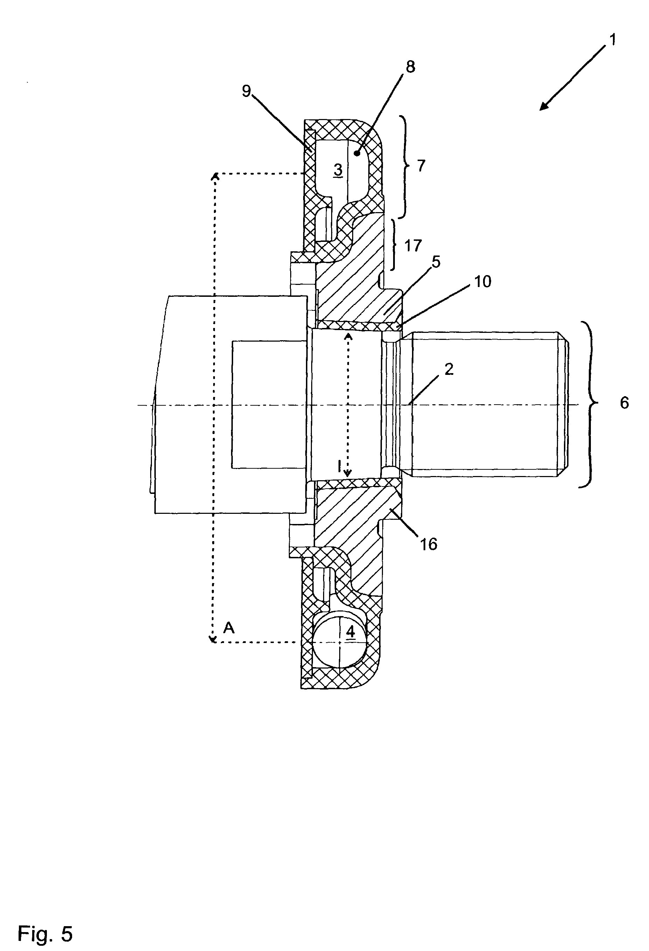

Die Figur 1 zeigt eine Auswuchtvorrichtung 1 in einer schematischen Längsschnittdarstellung entlang einer Drehachse 2 als ein erstes Ausführungsbeispiel der Erfindung. Die Auswuchtvorrichtung 1 wird mit einer Welle 13 (Figuren 4, 5) drehfest verbunden und rotiert gemeinsam mit dieser um die gemeinsame Drehachse 2.

Die Auswuchtvorrichtung 1 ist für ein Handgerät ausgebildet, insbesondere für eine Schleifmaschine oder eine Winkelschleifmaschine, wobei die Auswuchtvorrichtung 1 neben der Auswuchtfunktion zusätzlich eine Adapterfunktion zur Aufnahme einer runden Schleif- oder Schruppscheibe (nicht gezeigt) einnimmt.

In einem Ringkanal 3, welcher sich in einer Kreisform in einer Radialebene konzentrisch und/oder koaxial um die Drehachse 2 erstreckt, sind Auswuchtkörper in Form von Kugeln 4 angeordnet, welche sich in dem Ringkanal 3 frei bewegen können. Zur Dämpfung der Bewegung kann in dem Ringkanal 3 zusätzlich eine mittel- bis hochviskose Flüssigkeit, wie zum Beispiel Öl, eingebracht sein. Bei einer Rotation der Baueinheit Welle 13 - Auswuchtvorrichtung 1 nehmen die Kugeln 4 selbsttätig eine Position ein, welche gegenüberliegend zu einer Unwucht der Baueinheit bzw. den mit der Baueinheit verbundenen Massen ist, kompensiert dadurch die Unwucht und verringert somit störende Vibrationen.

Die Auswuchtvorrichtung 1 weist einen Metallgrundkörper 5 auf, welcher beispielsweise durch Sintern, spanende Verfahren oder ein Metal-Injection-Molding (MIM) - Verfahren gebildet ist. Der Metallgrundkörper 5 weist einen Aufnahmeabschnitt 6 auf, welcher zur Aufnahme der Welle 13 ausgebildet ist. Der Aufnahmeabschnitt 6 in dem Metallgrundkörper 5 ist in der Figur 1 als eine zylindrische Durchgangsöffnung in dem Metallgrundkörper 5 realisiert.

In dem radial äußeren Bereich weist die Auswuchtvorrichtung 1 einen Kunststoffträger 7 auf, in den der Ringkanal 3 zumindest abschnittsweise eingeformt ist. Hierzu zeigt der Kunststoffträger 7 eine umlaufende Ringnut 8, welche an ihrer offenen Seite durch eine Kunststoffringscheibe 9 verschlossen ist, welche mit dem Kunststoffträger 7 stoffschlüssig, zum Beispiel mittels Ultraschallschweißen, verbunden ist, um gemeinsam den flüssigkeitsdichten Ringkanal 3 zu bilden.

In dem Aufnahmeabschnitt 6 ist eine Zwischenlage 10 aus Kunststoff angeordnet, welche sich in dem Aufnahmeabschnitt 6 hülsenförmig erstreckt und dessen Innendurchmesser verringert. Nachdem die Passgenauigkeit zwischen Welle und Ringkanal 3 für die Funktion und die Qualität der Auswuchtvorrichtung 1 ausschlaggebend ist, werden die Zwischenlage 10 und der Kunststoffträger 7 besonders vorteilhaft in einem gemeinsamen Werkzeug in einem Arbeitsgang auf den Metallgrundkörper 5 mittels Kunststoffspritzguss aufgespritzt. Diese Vorgehensweise hat den Vorteil, dass der durch die Zwischenlage 10 definierte Innendurchmesser I hochgenau zu dem den Ringkanal 3 definierenden Außendurchmesser A positioniert und ausgerichtet ist. Eine Verkippung von Innendurchmesser I zu Außendurchmesser A oder eine Unwucht aufgrund von Positionsungenauigkeiten ist durch diese Fertigungsweise nahezu ausgeschlossen.

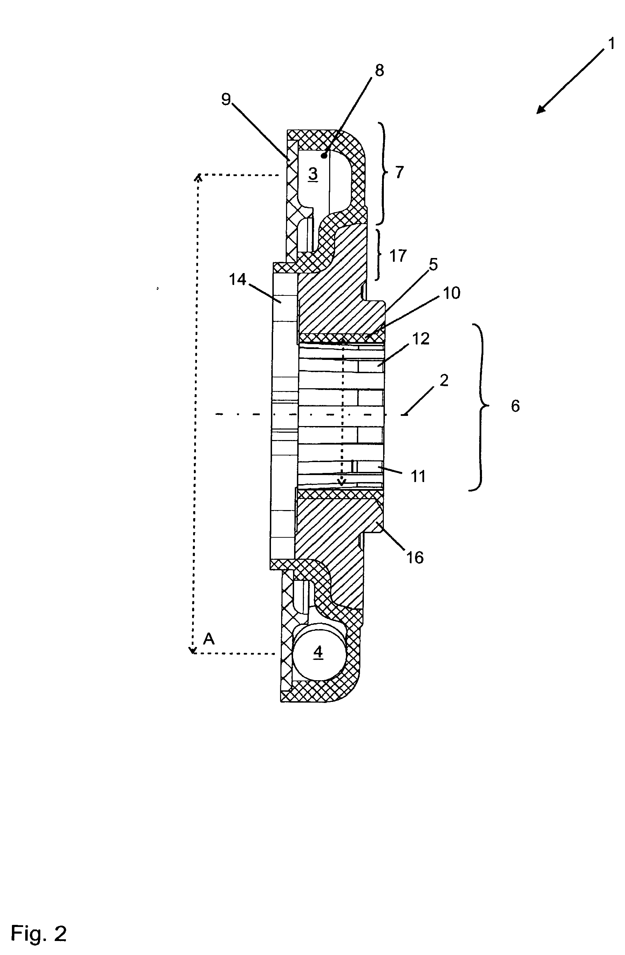

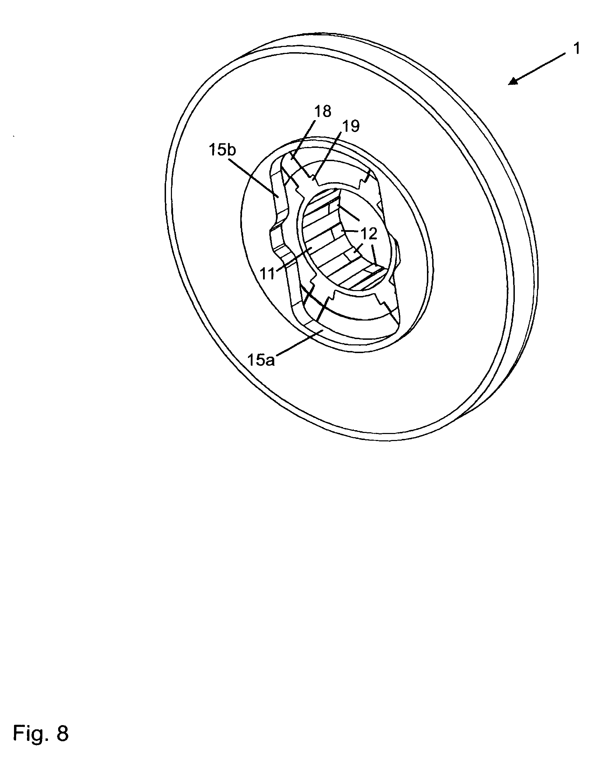

Die Figur 2 zeigt eine Variation der Auswuchtvorrichtung 1 in der Figur 1, wobei in der Zwischenlage 10 ergänzend in Richtung der Drehachse 2 verlaufende Rippen 11 eingeformt sind, welche in komplementär dazu ausgebildete Bereiche der Welle 13 eingreifen können. Wie sich insbesondere in gemeinsamen Betrachtungen mit der Figur 8, welche die Auswuchtvorrichtung 1 der Figur 2 in einer dreidimensionalen Darstellung zeigt, ergibt, sind die Rippen 11 in eine axiale Richtung rampenähnlich oder ansteigend ausgebildet, so dass diese in diese Richtung den freien Innendurchmesser I verringern. Im letzten Endabschnitt der Rippen 11 in axialer Richtung zeigen diese eine Verdickung 12, welche als Überdeckung derart mit der Welle 13 zusammenwirkt, dass das Material der Verdickung 12 verdrängt wird und auf diese Weise ein sehr haltbarer Presssitz zwischen Auswuchtvorrichtung 1 und Welle 13 erzeugt wird.

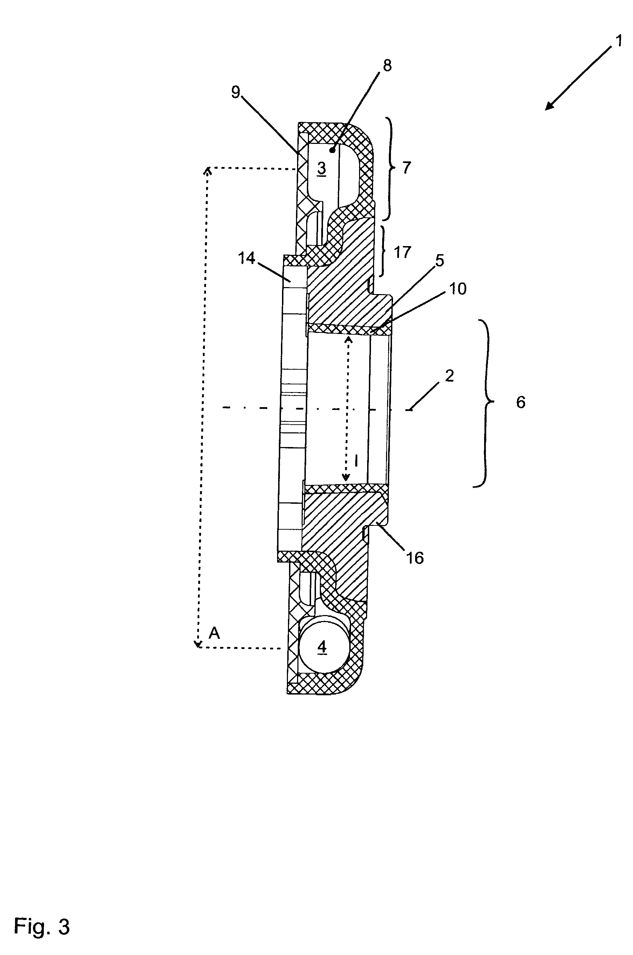

Die Figur 3 zeigt eine weitere Ausführungsform der Erfindung in gleicher Darstellung wie in der Figur 1 bzw. 2, wobei der Verlauf des Innendurchmessers I in axialer Richtung kegelig ausgebildet ist, um einen Klemmsitz auf der Welle 13 zu erreichen.

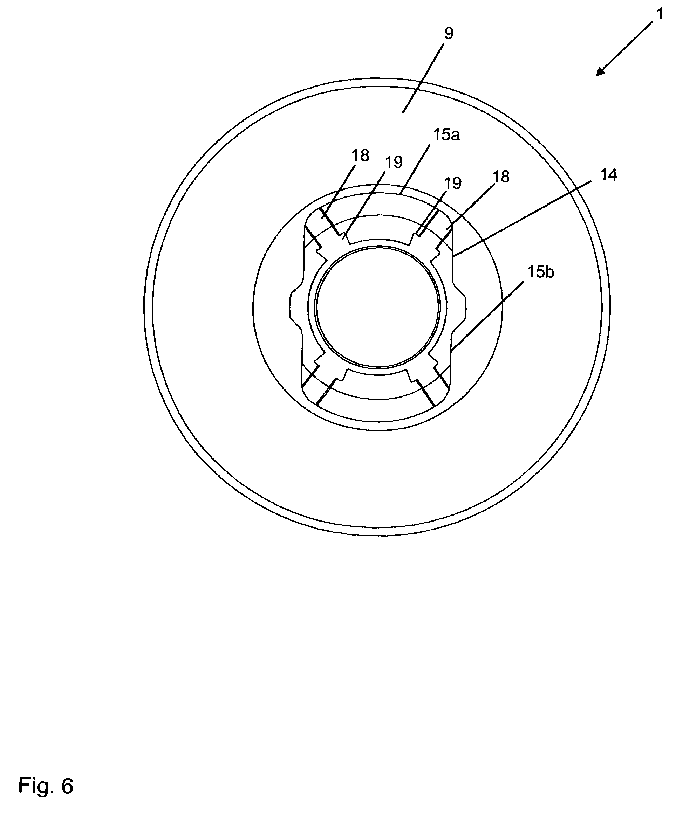

Die Figur 4 zeigt nochmals die Auswuchtvorrichtung 1 in der Figur 1 mit der schematisch eingesetzten Welle 13. Die Welle 13 wird von einer Aufnahmeseite in die Auswuchtvorrichtung 1 eingeschoben, wobei die Auswuchtvorrichtung 1 auf dieser Seite eine formschlüssige Aufnahme 14 (Figur 6) für die Welle 13 zeigt. Die in der Figur 6 darstellte formschlüssige Aufnahme ist ein so genannter Zwei-Flach, welcher als eine etwa rechteckige Vertiefung ausgebildet ist, wobei eine Seitenkante 15 a wesentlich kürzer als die andere Seitenkante 15 b ausgeführt ist. Nach dem Eingreifen der in diesem Bereich komplementär ausgebildeten Welle 13 ergibt sich ein Formschluss in Umlaufrichtung der Welle 13 bzw. der Auswuchtvorrichtung 1. Auf der der Aufnahmeseite gegenüberliegenden Seite kann die Welle 13 eine beliebige Form aufweisen, beispielsweise kann die Welle 13 ein Gewinde zur Aufnahme einer Spannmutter zeigen.

Bei der Anwendung als Adapter für eine Schleifscheibe wird die Schleifscheibe über einen stutzenartigen Fortsatz 16 des Metallgrundkörpers 5 zentrierend aufgesetzt und kann stirnseitig an einem umlaufenden Ringbereich 17 berührend und stützend an den Metallgrundkörper 5 anliegen.

Die Figur 5 zeigt das Ausführungsbeispiel in der Figur 3 ebenfalls mit eingesetzter Welle, wobei das Zusammenspiel zwischen dem kegelig verlaufenden Innendurchmesser I und einem komplementär dazu ausgebildeten Abschnitt der Welle 13 darstellt ist.

In der Figur 6, welche eine schematische Draufsicht auf die Auswuchtvorrichtung 1 in der Figur 1 zeigt, ist neben der Aufnahme 14 zu erkennen, dass in dem Metallgrundkörper 5 radial verlaufende Kanäle 18 eingeformt sind, welche an ihren radialen Enden schwalbenschwanzförmige Verbreiterungen 19 aufweisen, in die nicht dargestellte Schwalbeschwanzabschnitte in axialer Richtung eingeführt werden können.

Diese schwalbenschwanzförmigen Verbreiterungen 19 werden als Positionierhilfe bei der Positionierung des Metallgrundkörpers 5 in dem Werkzeug genutzt. Ergänzend ist zu bemerken, dass weitere Teile des Metallgrundkörpers 5, bis auf die Funktionsflächen der Fortsatzes 16 und des Ringbereichs 17 weitgehend von Kunststoff überzogen ist, welcher einstückig mit der Zwischenlage 10 bzw. dem Kunststoffträger 7 verbunden ist.

### Bezugszeichenliste

- 1: Auswuchtvorrichtung
- 2: Drehachse
- 3: Ringkanal
- 4: Kugeln
- 5: Metallgrundkörper
- 6: Aufnahmeabschnitt
- 7: Kunststoffträger
- 8: Ringnut
- 9: Kunststoffringscheibe
- 10: Zwischenlage
- 11: Rippen
- 12: Verdickung
- 13: Welle
- 14: Aufnahme
- 15a,b: Seitenkanten
- 16: Fortsatz
- 17: Ringbereich
- 18: Kanäle
- 19: Verbreiterungen

## Patentansprüche

1. Auswuchtvorrichtung (1) zur drehfesten Anordnung auf einer Welle (13), wobei die Welle (13) um eine Drehachse (2) rotierbar ist,
mit einem Ringkanal (3), welcher konzentrisch und/oder koaxial zu der Drehachse (2) angeordnet ist,
mit einer Auswuchtmasse (4), welche in dem Ringkanal (3) frei bewegbar angeordnet ist,
und mit einem Metallgrundkörper (5), der den Ringkanal (3) trägt und der einen Aufnahmeabschnitt (6) aufweist, welcher zur Aufnahme der Welle (13) ausgebildet ist,
**gekennzeichnet durch**
eine Zwischenlage (10) aus Kunststoff, welche an dem Aufnahmeabschnitt (6) angeordnet und/oder befestigt ist und zur Anlage an der Welle (13) ausgebildet ist.

2. Auswuchtvorrichtung (1) nach Anspruch 1, **dadurch gekennzeichnet, dass** die Zwischenschicht (10) einen Wellensitz für die Welle (13) bildet, wobei der Wellensitz eine zylindrische, kegelige und/oder konische Aufnahmegeometrie für die Welle (13) darstellt.

3. Auswuchtvorrichtung (1) nach einem der vorhergehenden Ansprüche, **dadurch gekennzeichnet, dass** die Zwischenlage (10) zu der Drehachse (2) gleichgerichtete Längsrippen (11) aufweist.

4. Auswuchtvorrichtung (11) nach Anspruch 3, **gekennzeichnet durch** die Welle (13), wobei die Längsrippen (11) an die Welle (13) derart angepasst sind, so dass sich bei der Montage eine Überdeckung (12) zwischen den Längsrippen (11) und der Welle (13) ergibt.

5. Auswuchtvorrichtung (1) nach einem der vorhergehenden Ansprüche, **dadurch gekennzeichnet, dass** die Zwischenlage (10) an dem Metallgrundkörper (5) stoffschlüssig befestigt ist.

6. Auswuchtvorrichtung (1) nach einem der vorhergehenden Ansprüche, **dadurch gekennzeichnet, dass** die Zwischenlage (10) im Kunststoffspritzguss an den Metallgrundkörper (5) angespritzt ist.

7. Auswuchtvorrichtung (1) nach einem der vorhergehenden Ansprüche, **dadurch gekennzeichnet, dass** der Ringkanal (3) durch einen Kunststoffträger (7) gebildet und/oder getragen ist, der an dem Metallgrundkörper (5) stoffschlüssig befestigt ist.

8. Auswuchtvorrichtung (1) nach Anspruch 8, **dadurch gekennzeichnet, dass** der Kunststoffträger (7) im Kunststoffspritzguss an den Metallgrundkörper (5) angespritzt ist.

9. Auswuchtvorrichtung (1) nach Anspruch 7 oder 8, **dadurch gekennzeichnet, dass** die Zwischenlage (10) und der Kunststoffträger (7) in dem gleichen Werkzeug im Kunststoffspritzguss an den Metallgrundkörper (5) angespritzt sind.

10. Auswuchtvorrichtung (1) nach einem der vorhergehenden Ansprüche, **dadurch gekennzeichnet, dass** der Metallgrundkörper (5) Positionierungshilfen (19) zur Positionierung in dem Werkzeug aufweist.

11. Auswuchtvorrichtung (1) nach Anspruch 11, **dadurch gekennzeichnet dass** die Positionierungshilfen als Schwalbenschwanzführungen (19) ausgebildet sind.

12. Auswuchtvorrichtung (1) nach einem der vorhergehenden Ansprüche, **dadurch gekennzeichnet, dass** der Metallgrundkörper (5) eine Aufnahmegeometrie (14) aufweist, in die die Welle (13) formschlüssig eingreift, so dass sich der Formschluss in Umlaufrichtung ergibt.

13. Auswuchtvorrichtung (1) nach einem der vorhergehenden Ansprüche, **dadurch gekennzeichnet, dass** weitere Bereiche des Metallgrundkörpers (5) mit Kunststoff um- und/oder überspritzt sind.

14. Handwerkzeugmaschine, insbesondere Schleifmaschine oder Winkelschleifmaschine, **gekennzeichnet durch** eine Auswuchtvorrichtung (1) nach einem der vorhergehenden Ansprüchen.

15. Verfahren zur Fertigung der Auswuchtvorrichtung (1) nach einem der Ansprüche 6 bis 13, **dadurch gekennzeichnet, dass** die Zwischenlage (10) in einem Werkzeug mittels Kunststoffspritzguss angespritzt wird, wobei optional der Kunststoffträger (7) in dem gleichen Werkzeug und/oder gleichzeitig angespritzt wird.
